Europäisches Patentamt

(19) European Patent Office

Office européen des brevets

(11) Publication number : **0 204 225 B1**

(12) **EUROPEAN PATENT SPECIFICATION**

(45) Date of publication of patent specification :
14.12.94 Bulletin 94/50

(51) Int. Cl.⁵ : **G06F 15/62, G06F 15/72**

(21) Application number : 86106995.3

(22) Date of filing : 23.05.86

(54) **System and method for the display of surface structures contained within the interior region of a solid body.**

(30) Priority : 05.06.85 US 741391
05.06.85 US 741390

(43) Date of publication of application :
10.12.86 Bulletin 86/50

(45) Publication of the grant of the patent :
14.12.94 Bulletin 94/50

(84) Designated Contracting States :
CH DE FR GB IT LI NL

(56) References cited :
IBM TECHNICAL DISCLOSURE BULLETIN,
vol. 18, no. 4, September 1975, pages
1163-1176, New York, US; D.E. SCHREIBER:
"Computing a set of triangular plates which
represent a potential surface of a scalar function defined at the vertices of a three-
dimensional cartesian mesh"

(56) References cited :
PROCEEDINGS OF THE I.E.E.E., vol. 71, no. 3,
March 1983, pages 420-431, IEEE, New York,
US; J.K. UDUPA: "Display of 3D information in
discrete 3D scenes produced by computerized
tomography"
W.M. NEWMAN et al.: "Principles of interac-
tive computer graphics", second edition,
1981, pages 389-410, Auckland McGraw-Hill,
US

(73) Proprietor : GENERAL ELECTRIC COMPANY
1 River Road
Schenectady New York 12305 (US)

(72) Inventor : Cline, Harvey Ellis
845 Harris Drive
Schenectady New York 12309 (US)
Inventor : Lorensen, William Edward
14 Hearthside Drive
Ballstone Lake New York 12019 (US)

(74) Representative : Lupton, Frederick et al
LONDON PATENT OPERATION,
G.E. TECHNICAL SERVICES Co. INC.,
Essex House,
12/13 Essex Street
London WC2R 3AA (GB)

## Description

Background of the Invention

The present invention is generally directed to a system and method for displaying surface information. More particularly, the present invention incorporates non-linear and linear interpolation to remove certain image artifacts. The images of the surfaces displayed are typically contained within the interior regions of solid bodies which are examined by computed axial tomographic (CAT) x-ray systems or by nuclear magnetic resonance (NMR) imaging systems either of which is capable of generating three dimensional arrays of data representative of one or more physical properties at various locations within a three dimensional volume. The present invention is especially directed to a system and method for the display of medical images so as to obtain images and representations of internal bodily structures. The images generated in the practice of the present invention provide three dimensional data for examination by physicians, radiologists, and other medical practitioners.

In conventional x-ray systems, a two dimensional shadow image is created based upon the different x-ray absorption characteristics of bone and soft tissues. A great improvement on the conventional x-ray system as a diagnostic tool was provided by the computed axial tomographic systems which have been developed over the last ten years or so. These so-called CAT systems are x-ray based and initially were used to produce since two dimensional views depicting transverse slices of a body, object, or patient being investigated. Three dimensional information was thereafter gleaned from CAT scan data by generating data for a number of contiguous slices and using the inferential abilities of the radiologist to suggest a three dimensional representation for the various internal organs. Shaded and contoured three dimensional images are generated from the three dimensional array of data generated by a sequence of such contiguous CAT scans. However, resolution in the z-direction, perpendicular to each slice, is usually lower than the resolution within a slice. This can produce undesirable artifacts. Similarly, the newer NMR imaging technology is also capable of generating three dimensional arrays of data representing physical properties of interior bodily organs. Moreover, NMR systems have the capability of better discriminate between various issue types, not just bone and soft tissues. NMR imaging systems are also capable of generating physiological data rather than just image data. However, whether NMR or CAT systems are employed, the data has been made available only as a sequence of slices and systems have not generally been available which provide true three dimensional images.

The display of three dimensional graphic images on a cathode ray tube (CRT) screen has principally been driven by the goals and directions of computer aided design (CAD) and computer aided manufacture (CAM). Systems have been developed for displaying solid bodies and for manipulating images in desirable fashions to create solid models for manufactured parts and for rotating and viewing these parts from a multiplicity of directions. In particular, CAD/CAM systems have been developed which accept so called wire-frame data. In a wire-frame display format, the display processor is provided with a sequence or list of three dimensional points representative of the end points of line segments. These line segments are joined to represent various surfaces. An advantage of these wire frame images is the ability to rapidly rotate the image about various axes to obtain different views. This is actually a computationally burdensome task which has only recently been satisfactorily solved through the utilization of high speed, large scale integrated circuit devices. A wire-frame image, even one which has been processed to eliminate hidden lines, may typically comprise a list of 50,000 vectors which is displayed on a screen, each "vector" being a (directed) line segment drawn between two points by a CRT form of display device. More sophisticated graphics processing systems not only accept wire-frame data, but also perform functions such as hidden line removal and continuous shading in various colors and/or in various shades of gray. In such systems, the viewing angle is selected by the operator. In systems displaying shaded images, the normal vector to the surface being displayed varies from point to point on the surface and the shading is determined from this normal vector and the viewing angle. Thus, it is seen that the information provided by the normal vector is very important in the shading which is applied to what is in actuality a two dimensional CRT screen image. It is the shading of this image (based originally on wire-frame data) that creates a very effective illusion of three dimensions. The shading data is generally produced from wire-frame data in various graphics processing systems which operate to convert the vector format of wire-frame images to the so-called raster scan format. It is the raster scan format that is most familiar to the television viewer. In general, computer graphics display systems and display methodologies are divided into vector based systems which are particularly appropriate for line type drawings and raster format systems which produce images which are more closely related to that which is seen by the human eye.

Related work in the field of displaying three dimensional images has been carried out by Gabor Herman who has employed a method in which each adjacent volume element is analyzed and quantized to discrete zero and one values. Surface approximations are made only by considering cube faces and surface normal information can only be partially reconstructed because of the quantization step that is performed. The result-

EP 0 204 225 B1

ing method also is computationally long and produces low resolution images and appears be slower than the present method for interactive use at this time.

Meagher, working for Phoenix Data Systems, has employed a method of octree coding in which the three dimensional data array is subdivided into eight regions and each region is subdivided until individual volume elements are formed. Regions not containing surfaces are not subdivided. However, this method requires special purpose hardware, while the images are crisp, individual volume elements produce a quantized artifact that is not observed in smooth tissues such as bone. Furthermore, octree encoding methods are incompatible with polygonal surface descriptions which are used in most of the advanced graphics display systems that have been developed for CAD/CAM technology. Other methods for displaying three dimensional data are, for example, described in U.S. Patent No. 4,475,104 issued October 2, 1984 in the name of Tsu Y. Shen. This patent appears to disclose a three dimensional display system which incorporates a depth buffer to provide separate 3D information as part of the mechanism for generating appropriate shading values.

The document "IBM Technical Disclosure Bulletin" Vol.18 No. 4, September 1975, D.E. Schreiber "Computing a set of triangular plates which represent a potential surface of a scalar function defined at the vertices of a three-dimensional cartesian mesh" describes a four-phase method involving the steps of:

(1) computing the vertices of the potential surface and the triangle faces which make up the surface;

(2) eliminating redundantly computed vertices to condense the vertex list, and computing the distinct objects which make up the total surface;

(3) computing the rendering of the potential surface; and

(4) eliminating the hidden lines and plotting the rendering on a computer controlled plotting device, or displaying it on a computer controlled interactive graphical device.

Overall this method is computationally expensive, requiring four different phases of computation. It would be desirable to provide a system and method for displaying surface information suitable for CAT and NMR which is computationally more efficient than the above system.

## Summary of the Invention

In one aspect, the invention provides a preprocessor for a display system for three dimensional images as claimed in claim 1.

In a further aspect, the invention provides a method for producing, on a display device, three dimensional surface representations as claimed in claim 15.

In the present invention, three dimensional data generated either by a CAT scanning system or by an NMR imaging system may be displayed and analyzed in a plurality of ways so as to produce on a display screen or other device a multitude of anatomical features which are selectable at the viewer's choice. In the system and method of the present invention, the data used to produce the three dimensional images is typically acquired once and then used and re-used to generate medical information and display images at the option of the viewer. The viewer is provided with the option of selecting one or more threshold values which determine, for example, whether or not bone surfaces as opposed to brain surface tissue is to be displayed. The viewer or operator of the present system can also select the appropriate viewing angle and can, at will, selectively ignore segments of the data generated in order to provide cross sectional views through any desired plane. Moreover, the viewing angle is selectable and it is possible to generate a sequence of images and display them sequentially to provide the medical practitioner with interior views of solid surfaces in a truly three dimensional manner from any desired viewing angle with the further capability of being able to construct a view through any plane or slice. Again, it is pointed out that for many purposes, an almost infinite variety of meaningful images may be created from only a single set of NMR or CAT scan slice data arrays. Certainly though, if the objective of the medical investigation is the study of internal anatomic variations as a function of time, then it is meaningful to produce a sequence of three dimensional data arrays indexed by time. The system and method of the present invention provide the medical practitioner, and surgeons in particular, with the ability to plan detailed and complicated surgical procedures using totally non-invasive diagnostic methods. The images generated by the present invention can only be described as truly dramatic and show every evidence of being as great an improvement in the medical imaging arts as computed axial tomography and nuclear magnetic resonance imaging.

While the system and method of the present invention will undoubtedly find its greatest utilization in the analysis and display of tomographic x-ray and nuclear magnetic resonance imaging data, the system of the present invention is equally applicable to systems employing ultrasound, positron emission tomography, ECT (emission computed tomography) and MMI (multi-modality imaging). Moreover, while the present invention is particularly applicable to the construction of medical images, it is also pointed out that the system and method of the present invention is applicable to the display of interior three dimensional surface structures for any system which is capable of generating three dimensional data arrays in which signal patterns are present which represent the value of at least one physical property associated with points in a solid body.

A particular advantage of the present invention is its ability to provide the medical practitioner with the ability to perform interactive functions with the machine in real time. Systems which do not permit interactive use suffer a significant disadvantage since a real time display methodology is required for optimal human interaction with the system, particularly in the case of a surgeon planning a difficult procedure. For example, in transplant surgery, it is often difficult to ascertain beforehand the precise shape or size of a body cavity which is to receive the implant. This is true whether or not the implant comprises human tissue or a mechanical device. It is therefore seen that it would be very important for a surgeon to be able to display the cavity in question on a screen in three dimensional form and be able to rotate it and section it at will, before any invasive procedure is undertaken. It is also important to such medical practitioners that the images generated are sharp and exhibit excellent contrast. The images generated should also depict surface texture wherever this is possible.

Accordingly, features of the present invention are to provide a system and method for the display of three dimensional information; to provide a displays system for use in conjunction with CAT scanners, ultrasound devices, NMR imaging systems, and any and all other systems capable of generating three dimensional data representative of one or more physical properties within a body to be studied; to provide a graphics system for medical images which is capable of interactive use and yet at the same time produces high quality images providing textural, shading, and other visual clues to the user; to provide a three dimensional graphics display system which is compatible with current CAD/CAM systems; the ability to generate and display three dimensional wire frame information; to maximize the information contained in a three dimensional data array for the purpose of surface representation; to provide a system and method which is readily fabricable in specialized electronic hardware including integrated circuit chips and read only memory (ROM) devices; to provide medical practitioners with the ability to emulate surgical procedures graphically prior to undertaking invasive measures; to provide a plurality of three dimensional surface views from a single set of collected data; and a system and method for display of three dimensional images of internal surface structures in such a way that the specific viewing angle and cross-sectional viewing plane may be selected by the user in an interactive manner.

In accordance with a preferred embodiment of the present invention, a system for displaying three dimensional surface structures comprises means for storing three dimensional signal patterns which represent the value of at least one physical property which is associated with a three dimensional body at rectangularly spaced grid locations within a body. The system includes means for retrieving eight adjacent signal pattern values, these values being located at cubically adjacent grid locations. As used herein and in the appended claims, the term "cubically adjacent" refers to grid locations which exist at the eight corners or vertices of a cube, or more generally, a parallelopiped. The system also includes means for -comparing each of these eight cubically adjacent values with a predetermined threshold value or range of values so as to generate an eight bit binary vector which is used herein as an addressing or generation mechanism. The system also includes means for generating a set of coordinate values for each of the distinct binary vectors generated. These coordinate values represent the vertices of at least one predetermined polygonal surface which approximates the intersection of surfaces determined by the threshold value with the volume defined by the eight grid locations. In general, these coordinate values are also selected to be dependent upon the location of the eight grid points within the body. With particular reference to the present invention, interpolation means are provided to adjust the coordinate values in a non-linear fashion based on three or more data values obtained along a grid line. A preferred embodiment of the present invention further includes display processor means for receiving the coordinate values and for converting these coordinate values to a particular display format. The preferred embodiment also includes means for displaying surfaces determined by the threshhold, the display means being driven by the display processor.

In accordance with a preferred embodiment of the present invention, a method for producing three dimensional surface representations on a display device such as a CRT screen includes the steps of generating three dimensional signal patterns in which the signal patterns represent the values of at least one physical property associated with a three dimensional body at regularly spaced grid points throughout the body. These three dimensional signal patterns are employed to generate an eight bit vector for each set of cubically adjacent locations throughout the body. The vector is determined by comparison of data values representing the physical property with a predetermined threshold value or range of values. This eight bit vector is used to generate a set of coordinate values for each of the 256 distinct eight bit vectors. The coordinate values generated represent vertices of at least one predetermined polygonal surface which approximates the intersection of surfaces determined by the threshold value with the volume defined by the eight grid locations. These coordinate values also depend upon the location of the grid location within the body. A non-linear interpolative operation is performed to adjust each coordinate value along a grid line based on three or more data values obtained at adjacent grid points, that is, along a grid line. These coordinate values are supplied to a display processor and display device for a generation of three dimensional images of at least one surface within the body, this surface being determined by the threshold value or values.

In the display of three dimensional surface pictures, say for example, on a CRT screen, it is very important to provide visual clues to the human eye with respect to orientation of each part of the surface. These visual clues are provided by shading the various triangular or polygonal surface elements which are displayed. For example, the more closely the normal direction to the surface is to the viewer's line of sight, the lighter is the shading that is applied (at least for positive rather than negative images). Surface segments which exhibit normal directions with components directed away from the line of sight represent surface structures which are not visible and therefore these normal directions provide a mechanism for eliminating the surface element from the view for a particular viewing angle. Surface elements having normal vectors with substantial components in a direction orthonogal to the viewing direction are represented by more darkly shaded surface elements. As used herein, the term "surface element" refers to triangular, or more generally polygonal, surfaces which are used to tile or tesselate, the desired surface.

In the medical aspects of the present invention, a discriminating threshold value or range may be chosen so as to selectively view various body structures. For example, if one wishes to view bony structures, a particular threshold value is chosen. However, if one wishes to view the surface structures of softer tissue, a different threshold value is selected by the operator. In any event, the system for displaying such three dimensional surface structures should include accurate means for determining local surface normal directions, since it is these directions which greatly enhance the ability of the viewer to recognize the shading clues for a truly three dimensional representation.

One of the significant features of the present invention is the ability to perform rapid generation of coordinate values representing polygonal and, in particular, triangular surfaces. These polygonal surfaces approximate the intersection of the desired surface with a three dimensional volume element. The eight values defined at the eight vertices of a three dimensional grid structure are employed to generate an eight bit vector. This vector is employed as an address to rapidly generate the coordinate values. In each voxel element (defined by the eight cubically adjacent grid points), the object is to define a surface which separates included from excluded vertices. In general, there are 256 cases which have to be analyzed for surface intersection arrangements. However, a significant observation of the present inventors has led to the conclusion that only 14 cases actually need to be constructed. The present inventors have determined that by rotation about any of three mutually perpendicular axes and by employing binary complementation methods, the 256 cases actually reduce to a mere 14 cases which require separate manual analysis (one additional trivial case requires no such analysis). Furthermore, the coordinate values may be readily obtained from an eight bit vector by means of a lookup table which is easily implemented in a read only memory (ROM). This method provides for rapid surface tesselation and offers two significant advantages. First, the vertices of the triangular or polygonal structures generated in the present invention, lie on the edges of cubical voxel grid patterns. This permits the use of interpolative methods for adjusting the position of the polygonal vertex along the cubical edge. In particular, non-linear interpolation is provided to produce smoother, more accurate images. This interpolation is done in accordance with data values occurring at three or more grid points, which values may be treated as weights. This provides additional flexibility for more accurately approximating the desired surface to be viewed. Secondly, since the representational objects generated in the present invention comprise polygons and triangles, normals to these approximating surfaces are readily computed and may be provided directly to devices designed for accepting display data in this form. This additional ability to accurately portray surface and surface normal information in a rapid fashion provides the present invention with significant advantages. Not the least of these advantages is the fact that the polygonal format generated is compatible with advanced graphics workstations which are used to manipulate three dimensional surface data. It is also seen that the resolution of the images produced by the present invention are superior to previous methods since the signal information is interpolated, rather than quantized, to accurately determine surface position and normal direction. As pointed out above, it is the accurate portrayal of the surface and the surface normals which provide the essential clues for the visual perception of displayed images as three dimensional objects.

## Description of the Figures

The subject matter which is regarded as the invention is particularly pointed out and distinctly claimed in the concluding portion of the specification. The invention, however, both as to organization and method of practice, together with further objects and advantages thereof, may best be understood by reference to the following description taken in connection with the accompanying drawings in which:

Figure 1 is a perspective drawing illustrating a vertex labelling scheme associated with each voxel in a three dimensional array of data;

Figure 2 is a perspective drawing illustrating an edge labelling scheme associated with each voxel element in a three dimensional array of data;

Figures 3A-3N are perspective illustrations included for the purpose of demonstrating the fact that all 256 intersection cases are reducible to only 14 distinct cases;

Figures 4A-4N are perspective illustrations which show the specific polygon or triangle employed for each one of the 14 cases;

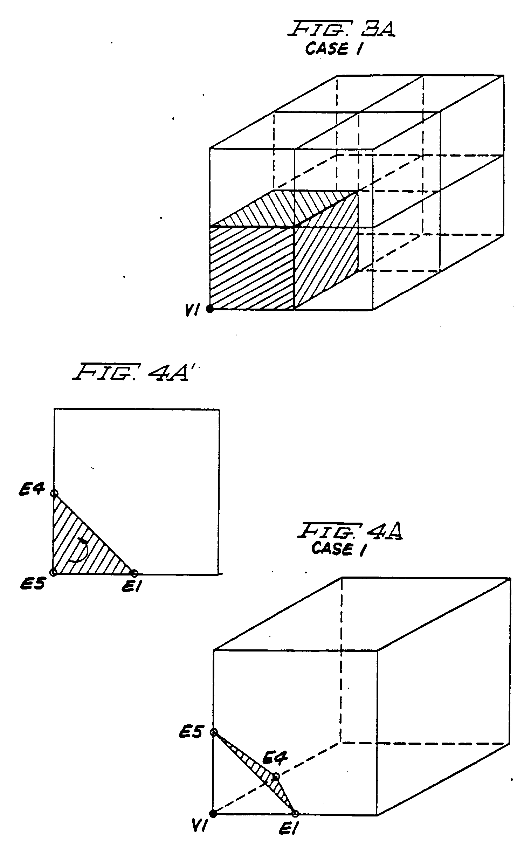

Figures 4A'-4N' are plan views of the cube and surface structure shown in Figures 4A-4N, respectively;

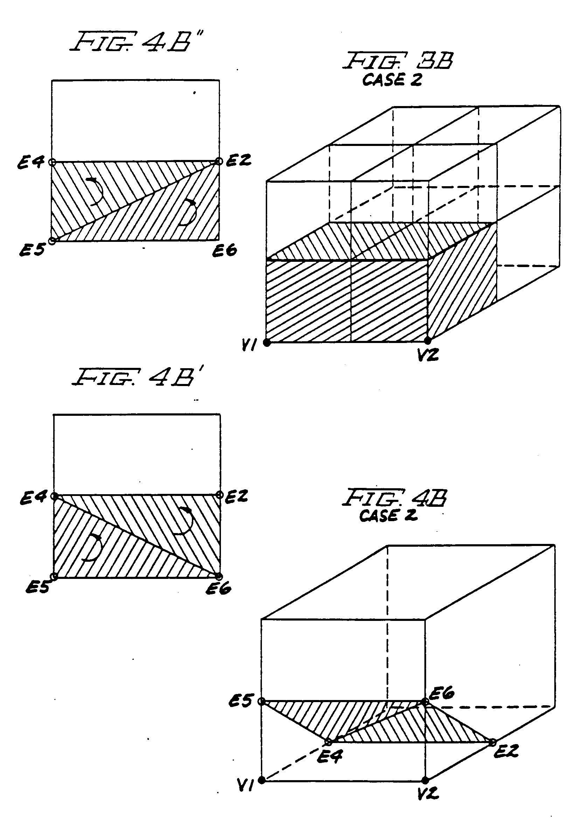

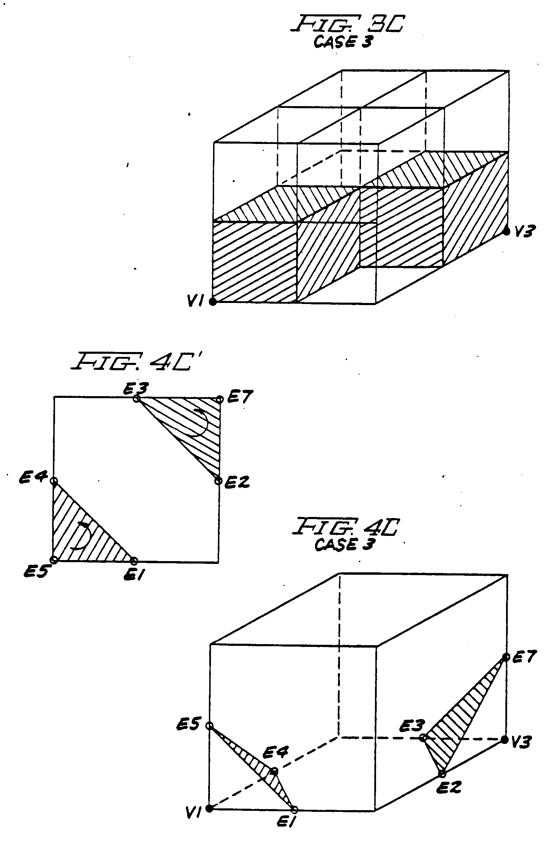

Figure 4B" illustrates a plan view of Figure 4B illustrating a slightly different polygonal representation as compared with that shown in Figure 4B';

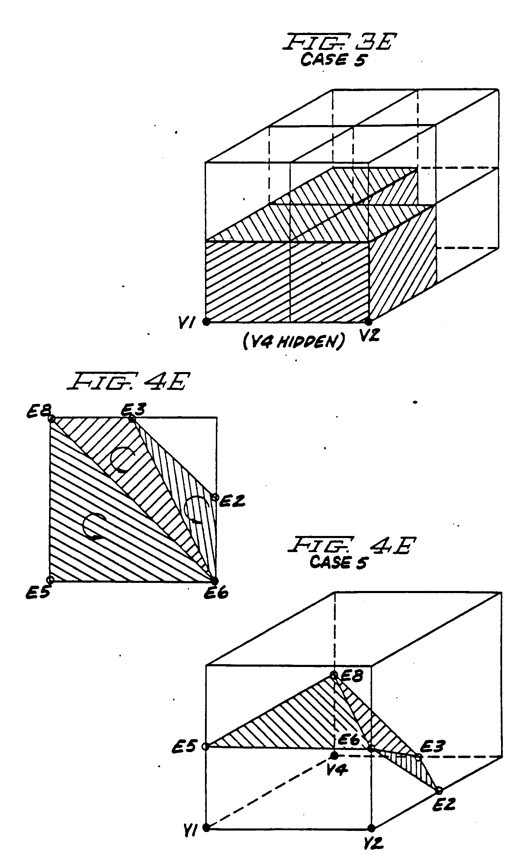

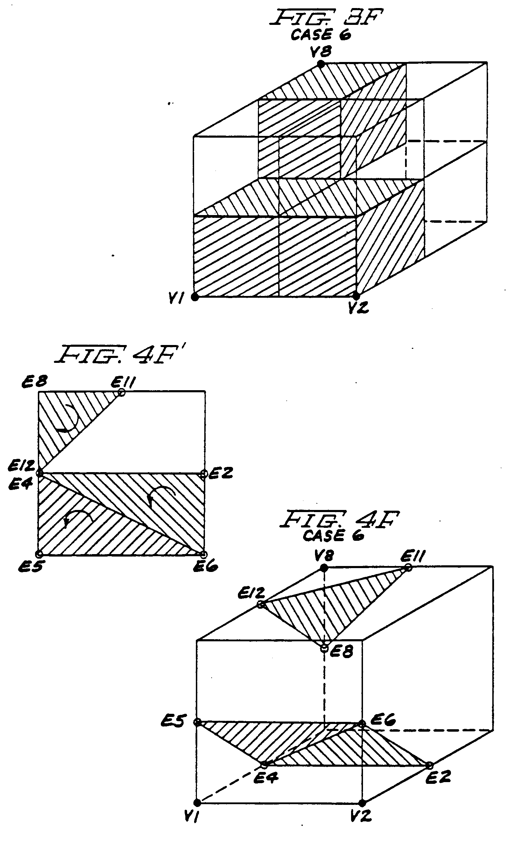

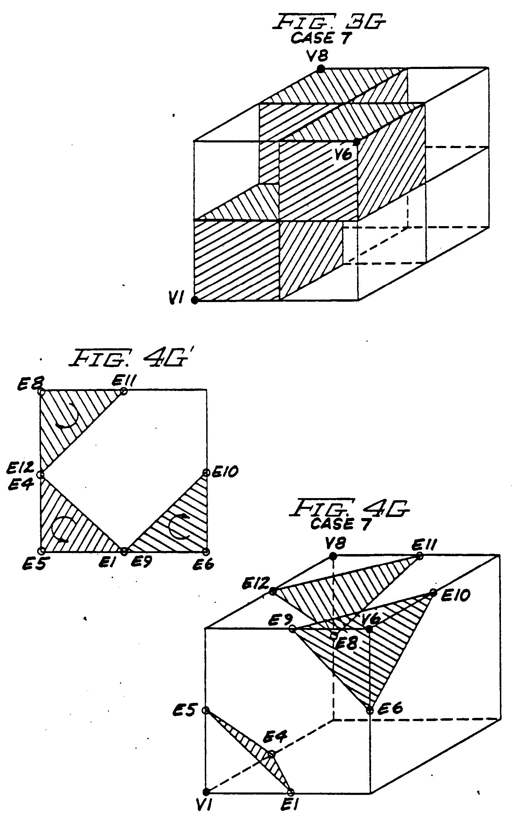

Figure 5 is a perspective view illustrating a linear interpolation method;

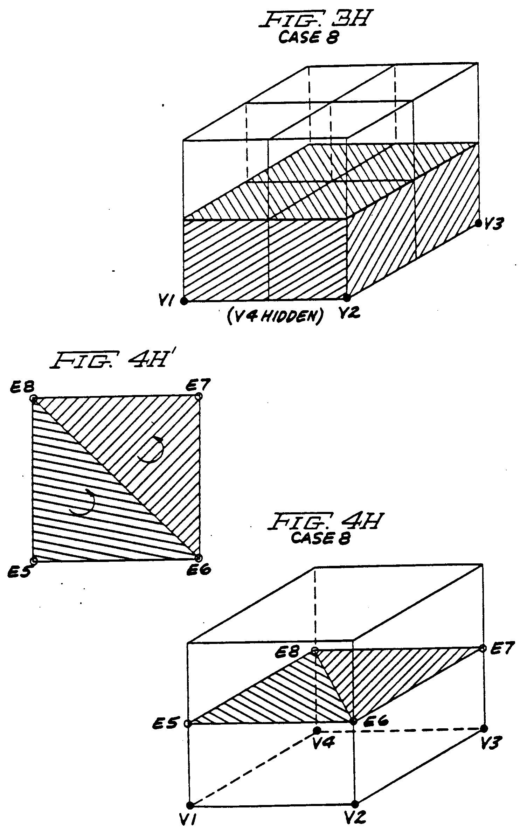

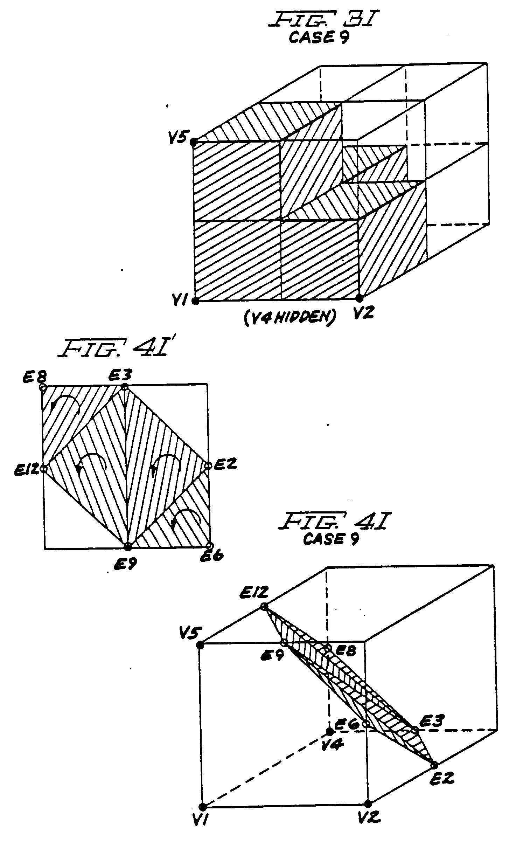

Figure 6A is an isometric view illustrating a network of quantized binary data points lying on the vertices of a cubical grid structure;

Figure 6B is an isometric view similar to that shown in Figure 6A in which the present invention is illustrated for a set of contiguous voxel elements;

Figure 6C is an isometric view of the three dimensional surface structure produced in accordance with the present invention in Figure 6B but drawn separately from the data points so as to provide a better view of the approximating surface for the data elements shown in Figure 6A;

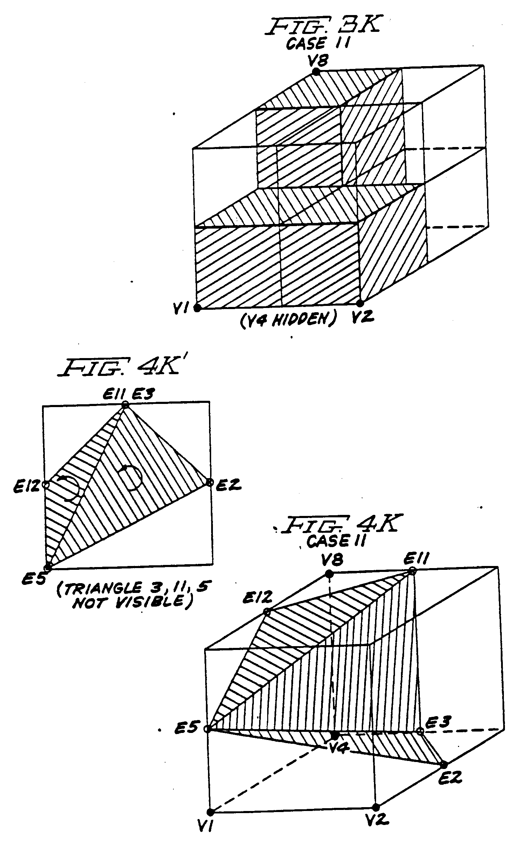

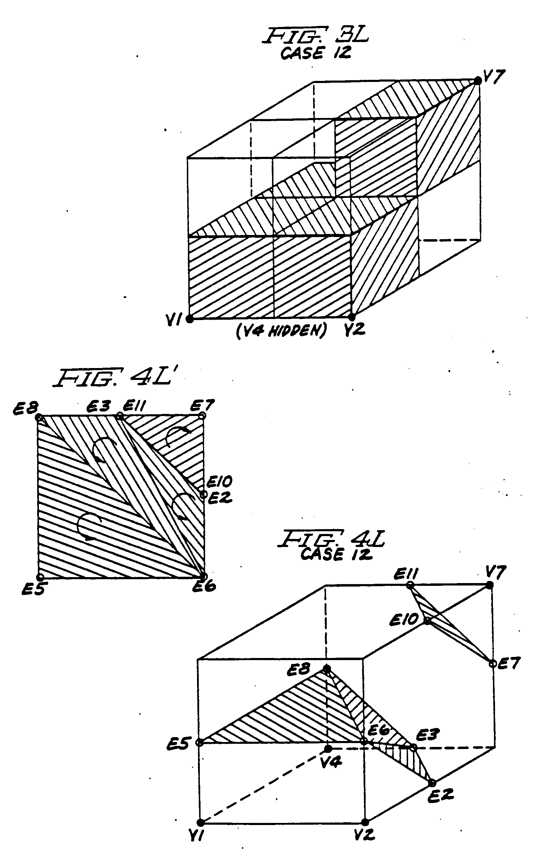

Figure 7 is a plot of intensity as a function of pixel distance which particularly points out the ability to distinguish internal body structures as a function of the measurement of various physical properties;

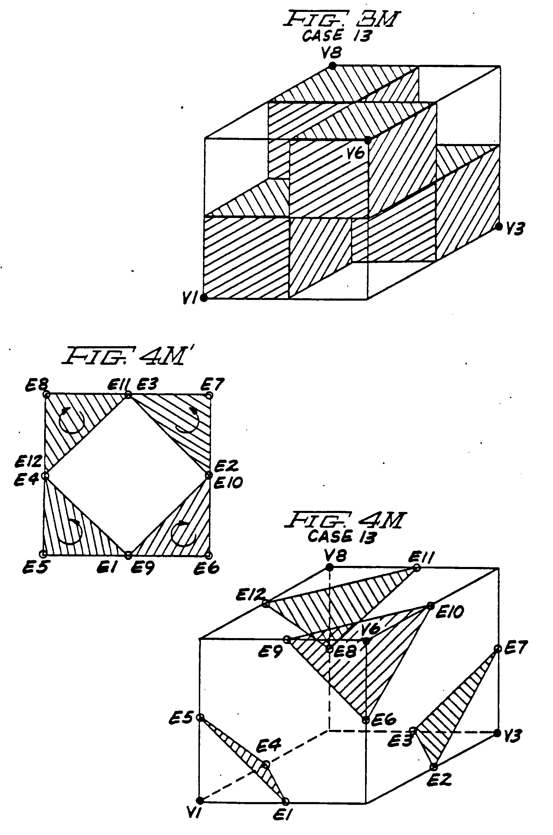

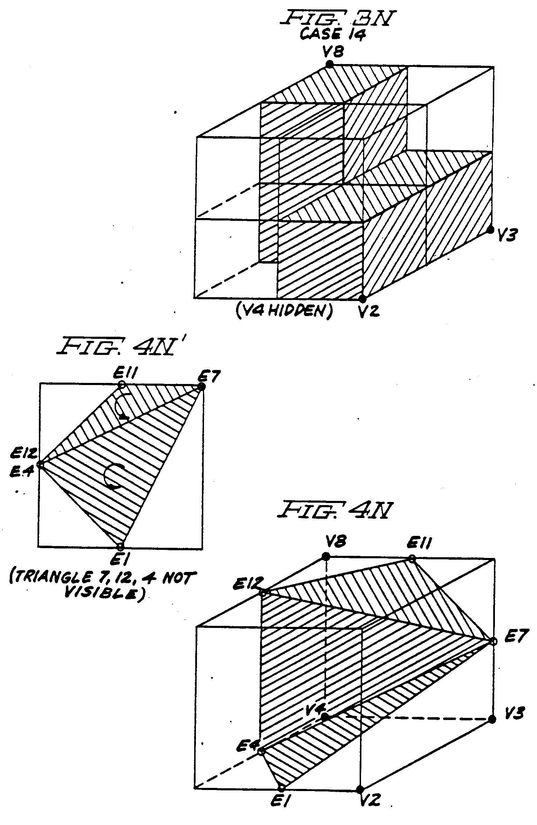

Figure 8 is a flow chart illustrating data flow in the present invention;

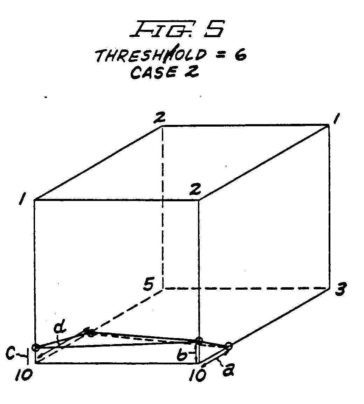

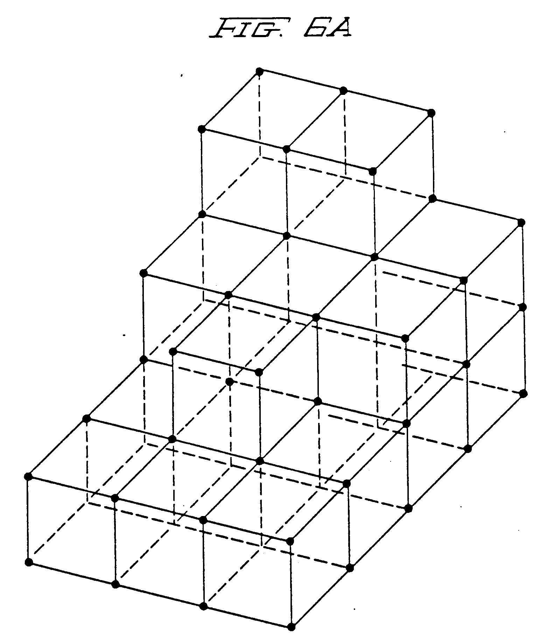

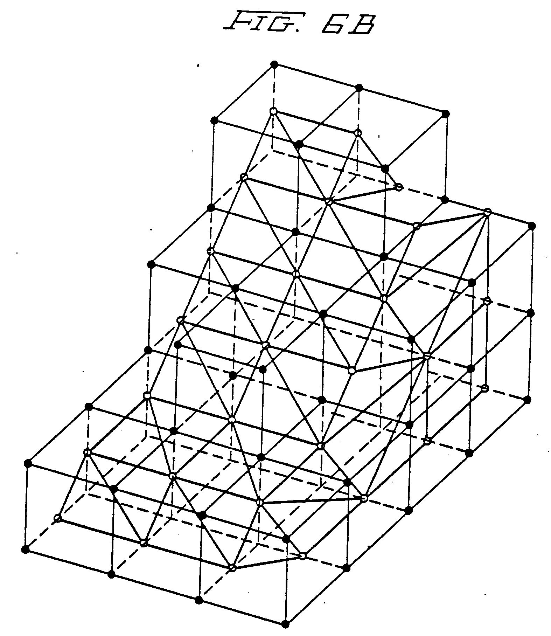

Figure 9 is a functional block diagram more particularly illustrating functional components in a system constructed in accordance with the present invention;

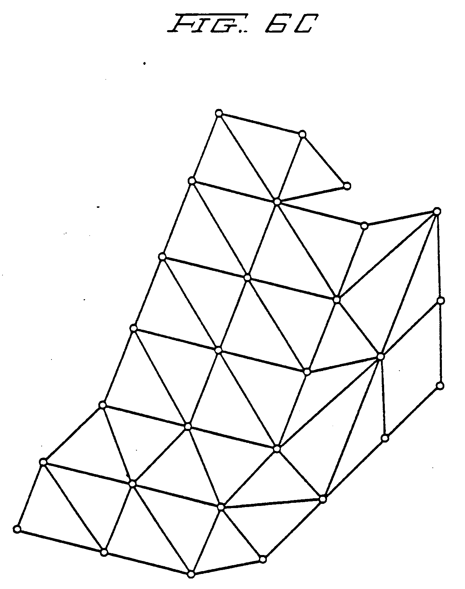

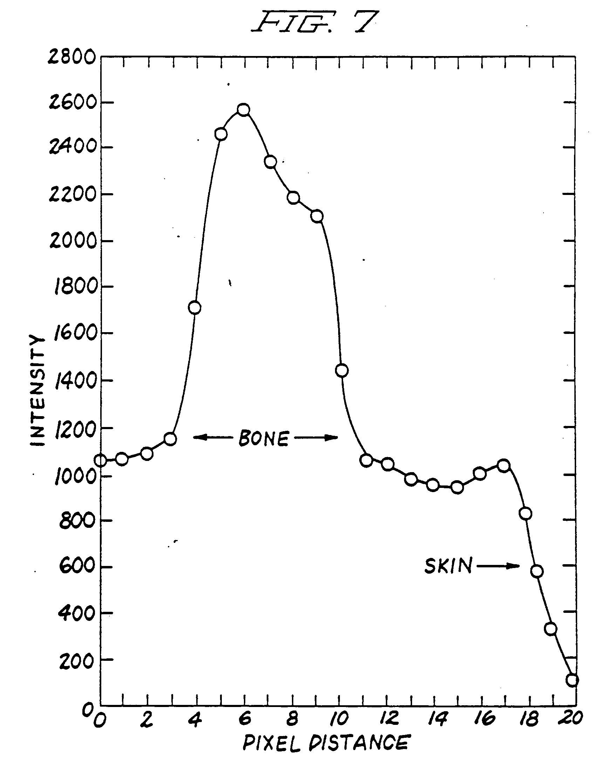

Figure 10 is a photograph of a CRT image of the skull of a living human being shown from the front;

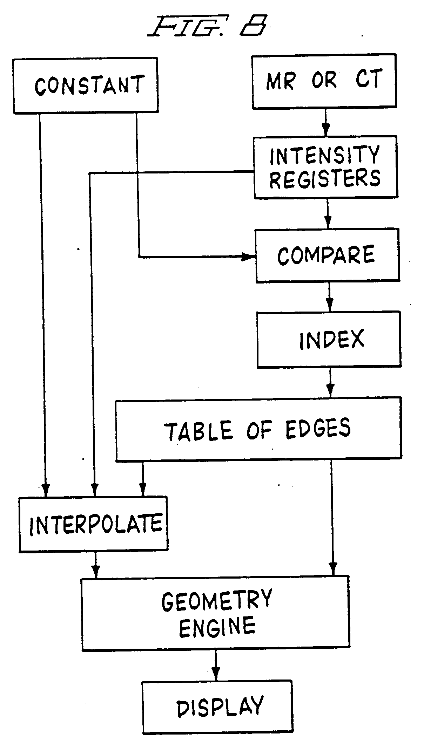

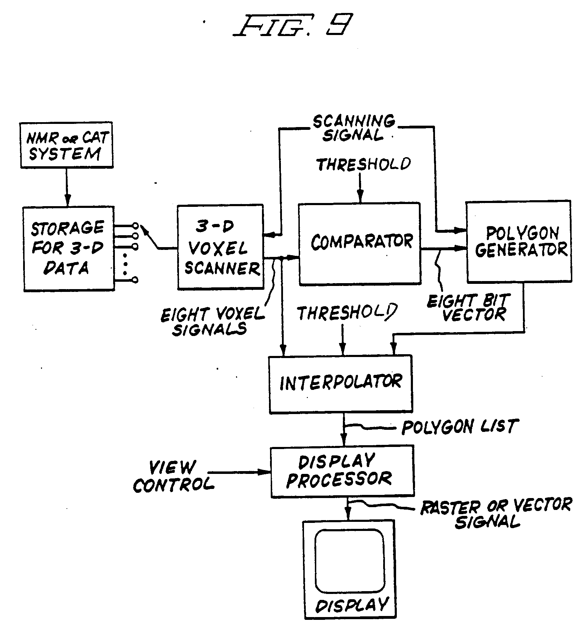

Figure 11 is a photograph of a CRT image of the side view of the same skull as shown in Figure 10, this image being generated from the same data as Figure 10;

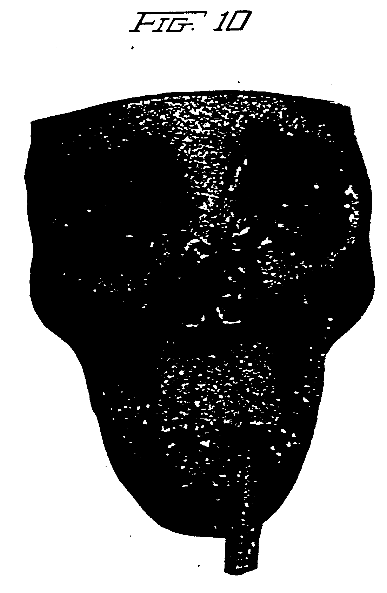

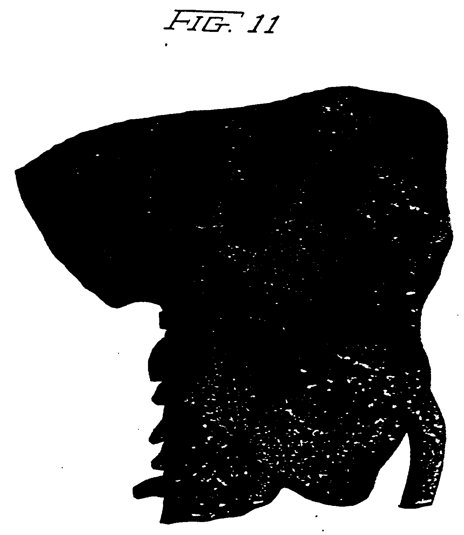

Figure 12 is a photograph of a CRT display screen image of the skull shown in Figures 10 and 11, viewed from a more rearward position and particularly illustrating the presence of certain undesirable artifacts;

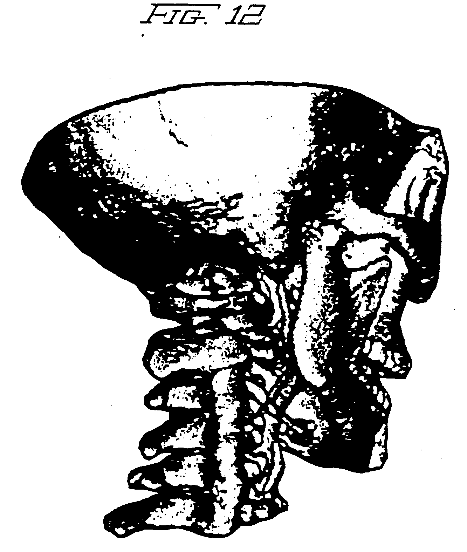

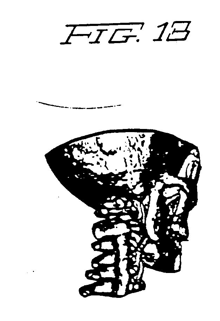

Figure 13 is a photograph of a CRT display screen image similar to that shown in Figure 12 except that undesirable artifacts have been reduced by the non-linear interpolation method of the present invention.

## Detailed Description of the Invention

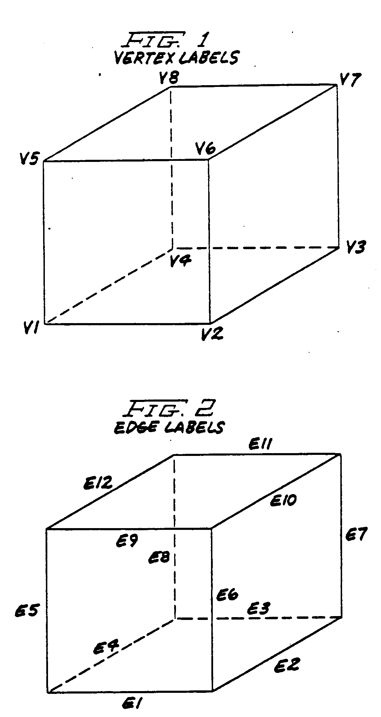

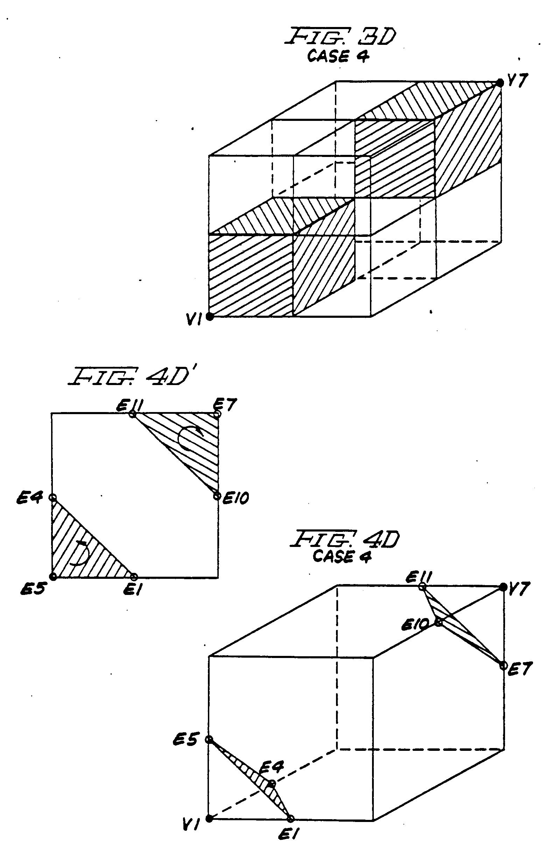

An understanding of the present invention can only be had by fully understanding the method of surface approximation employed. Likewise, this surface approximation method cannot be properly appreciated without analyzing the 14 cases illustrated in Figures 3 and 4. In order to understand the contents of these figures, one must first appreciate the vertex and edge labelling conventions employed. The vertex labelling scheme is illustrated in Figure 1, which illustrates the labelling convention applied to eight cubical vertices, V1 through V8, as shown. Likewise, Figure 2, illustrates the labelling of the 12 cubical edges. In Figure 1, the set of vertices illustrated are, in accordance with the definition given above, describable as being cubically adjacent. However, since scaling in any of three distinct directions is possible, it is understood that such points may also lie on the corners of a rectangular parallelopiped. However, the illustrations herein have been directed to regular cubical structures for purposes of clarity. It is pointed out that the illustrations in Figures 1 and 2 have been drawn with edges E3, E4, and E8 being shown as dotted lines to reflect their presence at the rear of the structure, that is, they are illustrated as hidden lines. This is also true of Figures 3A-3N and 4A-4N. It is noted that other vertex and edge labelling arrangements could just as easily have been employed without departing from the principles of the present invention. It is nonetheless important, however, to employ consistent edge and vertex labelling schemes.

Before a detailed discussion of Figures 3 and 4 is undertaken, it is appropriate to point out several features which are common to all of these drawings. These drawings illustrate 14 cases that are included as part of the analysis made in the present invention. These 14 cases have been reduced from a total of 256 possible cases. In each of the figures being considered, vertices are shown as filled in circles. Edges are depicted by open circles lying at the mid-points of the edges. In Figures 4A-4N, a surface or set of surfaces is shown. Each of these surfaces is defined by a sequence of edge points. Likewise, each surface is designed to isolate one or more of the eight vertices. In one case, only a single vertex must be isolated. In other cases, two, three, or four vertex points are to be isolated by triangular or polygonal surface approximations. These surfaces are approximations to the intersection of the desired surface with the voxel element. It is of course, understood that the entire surface is to be reconstructed from a plurality of these individual surface elements. In Figures 4A'-4N' and in 4B", indications are given for a vector normal to the approximating surfaces shown. In most cases, this normal direction is illustrated by circulating arrow following the righthand rule convention. In each case illustrated, the normal direction has been selected to be directed away from the vertex which is being isolated by the surface. In at least one case, because of the orientation of the polygons generated, the surface normals themselves are visible (see Figure 4J').

Attention is now directed to analyzing several examples of the polygonal surfaces generated in accordance with the system and method of the present invention. These polygonal surfaces are generated in response to the production of an eight bit binary vector based upon data comparisons made at each set of eight cubically adjacent grid locations within the body being investigated.

Attention is now specifically directed to case 1 as illustrated in Figures 3A, 4A, and 4A'. Figure 3A illustrates the case in which a single vertex is present at one of the eight vertex points of the cube. In Figure 3A, vertex 1, or V1, is shown as being present. This corresponds to the situation in which data values associated with the eight vertex points have been compared with a threshold value with the result that only one of the associated vertex values was found to be above (or below) a threshold value. It is the threshold value or range of values which serves to isolate the particular surface or surfaces within the three dimensional body being considered. For ease of appreciating the geometry, Figure 3A shows a block in the corner associated with V1. For a proper understanding of the present invention, it should be appreciated that case 1 actually represents a plurality of subcases which are determined by rotation about various axes. For example, rotations about one or more orthogonal axes through an angle of 90°, can move the small, internal block of Figure 3A into any desired corner of the cube. For example, rotation about a horizontal axis extending from the middle of the front face to the middle of the rear face of the cube shown can move the block from the V1 position to the V5 position and then from V5 position to the V6 position, and then from the V6 position to the V2 position, or in the corresponding opposite direction. Likewise, rotations about other selected axes are capable of producing a situation which differs from the case illustrated only in specific orientation and not in geometric structure. Likewise, case 1 also includes the complement situation in which vertices V2, V3, V4, V5, V6, V7, and V8 are turned "on" and in which V1 is turned "off". Thus, through rotational invariance and the use of complementary situations, it is appreciated that case 1 actually stands for 16 subcases (8 rotational invariances and their corresponding 8 complement cases).

The present invention can generate polygonal surfaces which represent surface approximations. Consideration then is given to the nature of the surface which intersects the voxel shown in such a manner that vertices on one side of the surface exhibit data values greater than a specified threshhold, and vertices on the opposite side of the surface, represent vertices with data values less than the selected threshhold value. While it is exceedingly tedious to generate an answer for each of the $256 = 2^8$ possibilities (8 being the number of vertices), it can nonetheless be appreciated that rotational and complementary cases can act to reduce this number. In fact, a reduction from 256 subcases to a mere 14 principle cases is possible and is illustrated herein in the figures which follow.

For the particular situation found in case 1, a triangular surface is selected as most closely representing the desired surface. This triangle is specified by the triplet of numbers 1,4,5 representing, in sequence, edge E1, edge E4, and edge E5. Once one knows the location of the particular cubical voxel element containing these edges and vertices, it is seen that it is immediately possible to generate appropriate coordinate values for these edge points. These values may be provided in an integer format or in a floating point format, or in any other format suitable for computational purposes. It is also, of course, preferable that the format chosen match the capabilities and characteristics of various display processors usable in the present invention. Thus, a binary number such as 0 0 0 0 0 0 0 1 representing the presence of vertex V1 is employable as an address or index vector as a means for addressing, accessing, or generating the number triplet representing edges E1, E4, and E5.

As indicated above, surface normal directions are important in the practice of the present invention. Accordingly, it is also desirable to be able to assign a surface normal direction associated with the triangular area shown in Figure 4A. For this purpose, attention is directed to Figure 4A' which is a plan view of Figure 4A. Figure 4A' also illustrates the presence of edges E1, E4, and E5. Note however, that Figure 4A' also associates this planar area with a counterclockwise arrow denoting, in accordance with the righthand rule, a normal direction pointing in a generally upward direction. This normal direction is of course, perpendicular to the planar area shown in Figure 4A. As pointed out above, it is the convention in the figures shown that the normal direction is selected to be in a direction away from the "on" vertex, here namely vertex V1. The orientation of the surface is preferably provided by an appropriate ordering of the vertices of the generated polygon. In this case, the sequence 1,4,5 also conveys information with respect to surface orientation. Alternate means for describing this surface also include the number triplet 4,5,1 and the number triplet 5,1,4. However, solely for the purpose of ease of comparison and understanding, the general rule employed herein is to designate each such number triplet so as the numerically smallest number is listed first. Accordingly, the planar area illustrated in Figure 4A is described by the number triplet 1,4,5. Accordingly, this number triplet is entered in Table I below for the

case 1 situation.

TABLE I

| CASE | VERTICES 8 7 6 5 4 3 2 1 | TRIANGLES FOR CONNECTING EDGES | | | |
|---|---|---|---|---|---|
| 0 | 0 0 0 0 0 0 0 0 | 0 0 0 | 0 0 0 | 0 0 0 | 0 0 0 |
| 1 | 0 0 0 0 0 0 0 1 | 1 4 5 | 0 0 0 | 0 0 0 | 0 0 0 |
| 2 | 0 0 0 0 0 0 1 1 | 4 5 6 | 2 4 6 | 0 0 0 | 0 0 0 |
| 3 | 0 0 0 0 0 1 0 1 | 1 4 5 | 2 7 3 | 0 0 0 | 0 0 0 |
| 4 | 0 1 0 0 0 0 0 1 | 1 4 5 | 7 10 11 | 0 0 0 | 0 0 0 |
| 5 | 0 0 0 0 1 0 1 1 | 5 6 8 | 3 8 6 | 2 3 6 | 0 0 0 |
| 6 | 1 0 0 0 0 0 1 1 | 8 11 12 | 4 5 6 | 2 4 6 | 0 0 0 |
| 7 | 1 0 1 0 0 0 0 1 | 1 4 5 | 8 11 12 | 6 9 10 | 0 0 0 |
| 8 | 0 0 0 0 1 1 1 1 | 5 6 8 | 6 7 8 | 0 0 0 | 0 0 0 |
| 9 | 0 0 0 1 1 0 1 1 | 2 9 6 | 2 3 9 | 3 12 9 | 3 8 12 |
| 10 | 0 1 0 1 0 1 0 1 | 1 4 9 | 4 12 9 | 2 11 3 | 2 10 11 |
| 11 | 1 0 0 0 1 0 1 1 | 5 11 12 | 3 11 5 | 2 3 5 | 0 0 0 |
| 12 | 0 1 0 0 1 0 1 1 | 5 6 8 | 3 8 6 | 2 3 6 | 7 10 11 |
| 13 | 1 0 1 0 0 1 0 1 | 1 4 5 | 6 9 10 | 2 7 3 | 8 11 12 |
| 14 | 1 0 0 0 1 1 1 0 | 7 11 12 | 7 12 4 | 1 7 4 | 0 0 0 |

The various cases considered are also described in Figures 3 and 4. For convenience, Table II below is provided to facilitate reference to the appropriate figures for the 15 cases presented herein.

TABLE II

| CASE | FIGURES |
|---|---|
| 0 | None |
| 1 | 3A, 4A, 4A' |
| 2 | 3B, 4B, 4B', 4B" |
| 3 | 3C, 4C, 4C' |
| 4 | 3D, 4D, 4D' |
| 5 | 3E, 4E, 4E' |
| 6 | 3F, 4F, 4F' |
| 7 | 3G, 4G, 4G' |
| 8 | 3H, 4H, 4H' |
| 9 | 3I, 4I, 4I' |
| 10 | 3J, 4J, 4J' |
| 11 | 3K, 4K, 4K' |
| 12 | 3L, 4L, 4L' |
| 13 | 3M, 4M, 4M' |
| 14 | 3N, 4N, 4N' |

Table I above is important for an understanding of the operation of the present invention. This table is illustrative of the means employed herein for strategically representing approximating surfaces using formats which are easily recognized by graphic display processors. Accordingly, the following conventions have been employed in the construction of Table I. In particular, for each eight bit vector address in the column labelled "VERTICES", there is a corresponding sequence of up to four number triplets representing appropriate triangular approximating surfaces. Each approximating surface is specified by a triplet of edge numbers. In each triplet, the lowest numerical edge number is employed first. Additionally, each set of triplets occurs in an order which is reflective of the surface normal direction chosen. It should, of course, be appreciated that by convention one could have selected surface normals to be oriented in the opposite direction. This is, however, merely a matter of design choice, the only important aspect being that a consistent choice be made.

It should also be pointed out that the results generated in Table I are dependent upon the specific labelling arrangement for the vertices and the edges of the cubical or rectangular voxel element. However, once a labelling scheme is decided upon, it is important that the same labelling arrangement be employed in considering each of the cases listed. It is also useful to point out that in case 0, no triangular or other surface representational signals are generated since this corresponds to the situation in which the surface selected does not intersect the chosen voxel element. Table I indicates this situation as a string of zeros in the row of Table I corresponding to case numeral 0. It is also noted that for each case, up to four triangular surface regions are generated from the table. However, it is noted that it is also possible to employ a table in which polygonal rather than triangular surface approximations are generated. More is said about this particular point below.

Consideration is next turned to case 2 as particularly illustrated in Figures 3B, 4B, 4B' and 4B". A generic form of case 2 is shown in Figure 3B representing the case in which two adjacent vertices and only two such vertices are found to either exceed or fall below the selected threshold value. In this case, "adjacent" means vertices having a single edge in common. For this reason, it is seen that case 2, as shown, actually includes 12 subcases corresponding to the selection of adjacent vertex pairs, or equivalently 12 edges. Additionally, it is seen that, by considering complementary cases, the number of actual subcases covered by case 2 is 24. It is thus seen that this is the manner in which the 256 possible cases are reduced to a manageable number in accordance with the present invention. For example, it is seen that case 2 covers those situations in which the following pairs of vertices are selected: V6 and V7, V4 and V1, V3 and V7, V2 and V3, etc. When one considers complementary cases, it is seen that Figures 3B and 4B also include the case in which the data values associated with vertices V3, V4, V5, V6, V7, and V8 all either exceed or fall below a specified threshold value. These subcase listings are, however, only exemplary of the full range of possibilities. Rotations of the three dimensional cube about any of its symmetry preserving axes clearly shows that all of these subcases are equivalent except for orientation. The basic structure of each case is nonetheless distinct across the set of cases, but uniform within each of the subcase situations.

Figure 4B indicates the polygonal approximating surface generated in case 2. In particular, the polygon with vertices on edges 2, 4, 5, and 6 (in that order) is the result. However, it is also seen that any polygonal approximating surface which is generated may also be generated by a corresponding set of triangular surfaces. These triangular surfaces are also illustrated in Figure 4B. It is thus seen that case 2, using Table I, results in the generation of triangles 4, 5, 6, and 2, 4, 6. The quadrilateral in this instances, is broken up into two triangles having the line joining edges E4 and E6 as a common edge. The top view of this configuration is shown in Figure 4B′. However, it is also noted that it is possible to break up the quadrilateral into two triangles in the manner indicated in Figure 4B″ by including as a diagonal, the line joining edges E2 and E5. In those cases in which polygons having more than three sides are generated, it is seen that this kind of potential ambiguity results. However, image quality is not degraded in any significant fashion by this ambiguity as long as consistent choices are made. In the present invention, consistency is easily assured by using a fixed version of Table I throughout the generation of an image. However, it is noted that these kinds of variations in Table I are also included in the concept of the present invention. Thus, it would also be possible in accordance with Figure 4B′ to generate in case 2 of Table I, triangles 2, 4, 5, and 2, 5, 6, rather than triangles 4, 5, 6 and 2, 4, 6. The present invention also includes the concept of generating quadrilaterals or other polygons in association with the various cases as appropriate. Thus, in case 2, it is also possible to employ a table which is used to generate a quadrilateral described as an edge sequence. In case 2, this edge sequence would be 2, 4, 5, 6, or any cyclic permutation thereof, it being understood, of course, that cycles taken in the opposite direction produce reversed normal directions. In this last regard, it is noted that all that is required in the practice of the present invention is consistency in the selection of the normal direction, either choice either being adequate in itself or readily compensated for.

It is also appropriate to note that, with respect to Table I, the order in which the number triples are listed is not important. For example, for case 2, it would have been just as appropriate to list edge triple 2,4,6 before edge triple 4,5,6.

Case 3, as illustrated in Figures 3C, 4C, and 4C′, illustrate the case in which a pair of facially diagonally disposed vertices are selected. This would include subcases such as : V1 and V6, V4 and V7, V2, and V4, V5 and V7, etc. As above, the complementary subcases are also covered by the same set of approximating surfaces but with their normal directions reversed. Case 3 is treated in much the same manner as the other cases. The significant new feature indicated in case 3 is the fact that the surface approximations generated in the present invention do not necessarily comprise contiguous surface elements. The resultant triangles generated in case 3 are listed in Table I and effectively covers all those vertex pairs selections which lie on the same facial diagonal. Since there are 6 faces and two diagonals per face, case 3 actually includes 12 uncomplemented subcases and 12 complementary subcases. Again, the reduction of the cases to a more manageable number is readily apparent.

Next is considered the situation occurring in case 4, which is particularly illustrated in Figures 3D, 4D, and 4D′. Case 4 actually represents that set of subcases in which the pair of vertices selected lies on a body diagonal of the cube. Since there are four such body diagonals, case 4 corresponds to four uncomplemented subcases and four complemented subcases for a total of eight subcases. The surfaces generated in accordance with the present invention are particularly illustrated in Figure 4D. A top view of the cube shown in Figure 4D is shown in Figure 4D′. It is perhaps advantageous in this situation to note the directions of the circulating arrows shown. These "circulating arrows" orient the surface by specifying, the normal direction in accordance with the righthand rule. There is, of course, nothing special about specifying a righthand rule, the only important aspect being that consistency is maintained.

It is also appropriate to note that the vertices of the triangles shown in Figures 4A-4N are shown as lying at the midpoints of the edges of the cube. However, it is also important to note that a preferred embodiment of the present invention incorporates an interpolation mechanism which adjusts the position of the edge points in accordance with the data values obtained at the vertices of the voxel element. This provides significantly improved shading for the images generated, restoring much of the information potentially lost in establishing a dichotomizing surface between vertex points.

Next is considered case 5. Case 5 is handled in the same manner as the cases described above. However, the principal additional aspect now being the fact that three vertices are selected for separation. Case 5 covers all of those subcases in which the three vertices selected lie on the same face of the voxel element. It is is thus seen that there are then six uncomplemented and six complemented subcases of this sort. Thus, case 5 actually incorporates 12 subcases. The practical effect of this incorporation is that a detailed analysis of each of the subcases is avoided, these being covered instead by equivalence induced by rotation and complementation operations. It is also seen that case 5 is different from the other cases considered so far in that there are actually three triangles generated. These triangles are listed in case 5 in Table I as triangles (edge lists) 5,6,8; 3,8,6; and 2,3,6. The top view shown in Figure 4E' provides a view which illustrates the use of circulating arrows to indicate surface orientation. The surface generated in case 5 not only includes three triangles, but it is seen that only two of these triangles lie in the same plane. However, it is noted that the planarity of the approximating surface which is generated is highly dependent upon modifications made as a result of an interpolation step. It is also noted that a table of polygons, as opposed to triangles, could also be established so as to associate case 5 situations with an edge list such as 2,3,8,5,6, or appropriate variations thereof as determined by particular subcases. However, the use of triangles is preferred since a finer resolution is generally obtained with more precise specification of normal directions.

Cases 6-14 are illustrated in Figures 3F-3N, Figures 4F-4N, and Figures 4F'-4N'. Case 14 in particular arises out of the fact that case 11 does not possess chiral symmetry, that is, no rotation of the cubes in case 11 (Figure 3K) can orient the inner cubes in the manner illustrated in Figure 3N. These two cases do, however, possess mirror image symmetry. This symmetry is reflected in Figures 4K and 4N. Cases 6-14 are constructed in the same manner as described above. These constructions are illustrated in the appropriate figures, as described in Table II. Accordingly, a detailed analysis of each of these cases is not necessary at this point since they are self-explanatory in light of the material above. However, it is useful to consider these figures for the purpose of determining that the cases considered therein together with appropriate symmetries induced by rotation and complementation serve to cover all of the remaining possibilities. It should also be noted that Table I, in the column labelled "VERTICES" provides in effect, an eight bit vector which is uniquely associatable with one or more edge sequences denoting triangles or polygons which approximate surface intersections with the cubical or rectangular voxel element. The analysis illustrated in Table I is repeated for each of the voxel elements and is used to provide a vector list for receipt by display processor means which is capable of converting the data list to either a vector scan format or to a raster scan format.

Figure 5 illustrates a linear form of interpolation which, while very effective, nonetheless can produce artifacts such as those seen in Figure 12, discussed below. Figure 5 illustrates a voxel element with data values provided at each of the eight vertices. It is important to note that the numbers shown at the vertices in Figure 5 are data values, not vertex labels. In particular, Figure 5 illustrates case 2 with a threshold value of 6. It is seen that the only two vertices which exceed this value are the two lower front vertices, each having an assigned data value of 10. If this cube had been labelled with the vertices of Figure 1, the corresponding labels would be V1 and V2 (assuming that the cube in Figure 1 and Figure 5 are oriented in the same direction). It is noted that each of the open circles in Figure 5 have been displaced a certain distance from the midpoints of the edges. Thus, while the separating surface shown for case 2 in Figure 4B is planar, it is seen that the interpolation provided in the present invention does not restrict the approximating surfaces in this manner. This results in much sharper images with improved three dimensional shading clues. It is seen that each of the vertex points for the triangles are moved along a voxel edge by a distance which is a function of the data values at the vertex points which determine the edge. For example, it is seen that the distance "a" along what corresponds to edge E2 may be chosen to be proportional to 3/(10 + 3) since 10 and 3 are the data values associated with this edge. In a like manner, the distances b, c, and d are chosen based upon the values at the vertex points which determine each edge. If desired, interpolation may also involve use of the selected threshold value. It is noted that the vertex points for the approximating surfaces generated in the present invention are therefore determined in such a way that consistent approximating surfaces are defined for adjacent voxel elements. Each voxel element is, of course, a cubical (but more generally a parallelopiped) volume such as is shown in Figure 5 and the figures previously discussed.

To improve the surface reconstruction accuracy in the present invention, higher order terms are included in the interpolation to calculate the surface coordinates. The measured intensity profile across a computerized tomography slice of the skull illustrates a non-linear transition at the interface between the bone and soft tissue (see Fig. 7). At the threshold level used to contrast bone, 1154, the profile has a positive curvature. If the 240 X 260 data is sampled at low resolution of 60 X 65, images of the skull show contours marking the data planes. A linear interpolation of the surface intercept of the curved profile produces images in which these contours are evident. Note the appearance of ripples near the base of the back of the cranium in Figure 12.

If the intensity profile I(x), is sampled at X=0 and X=1 the linear interpolation at the threshold value, C, gives the intercept

$$x_0 = \frac{(I_0 - C)}{(I_0 - I_1)} \quad (1)$$

which is only an approximation to the actual surface intercept given by

$$I(x) = C. \quad (2)$$

The error $x_0 - x$ results from the linear approximation. A quadratic interpolation is used to improve the accuracy of finding the surface position. The intensity curve is assumed to be of the form

$$I(x) = a_0 + a_1 x + a_2 x^2. \quad (3)$$

The coefficients are obtained using the data values at (normalized data points) $x = -1$, $x = 0$, and $x = 1$ from:

$$I_{-1} = a_0 - a_1 + a_2 \quad (4a)$$
$$I_0 = a_0 \quad (4b)$$
$$I_1 = a_0 + a_1 + a_2 \quad (4c)$$

Solving the above equations gives the coefficients

$$a_0 = I_0$$
$$a_1 = \frac{I_1 - I_{-1}}{2}$$
$$a_2 = \frac{I_1 + I_{-1} - 2I_0}{2}$$

The variation in intensity $\delta I$ between the actual profile and the linear approximation is related to the variation in the position of the curves $\delta x$ by the slope of the intensity profile

$$\frac{\partial I}{\partial x} = a_1 + a_2 x \quad (5)$$

Thus the error in linear interpolation becomes

$$\delta x = \frac{a_2 x (1 - x)}{a_1 + a_2 x}$$

Assuming the correction is small, the value of x may be replaced by $x_0$ and the gradient evaluated at the position $x = 0$ to give the approximate relation

$$x = x_0 + k x_0 (1 - x_0) \quad (7)$$

where the constant is related to the intensity values

$$k = \frac{I_1 + I_{-1} - 2I_0}{I_1 - I_{-1}}$$

This method is also easily extended to include four data points and an interpolation based on

$$I(x) = a_0 + a_1 x + a_2 x^2 + a_3 x^3.$$

While further extensions are possible, the increased computation involved makes them less desirable, especially in view of the marginal gains in image quality expected.

It is, of course, important to be able to piece together surface structure representations from the approximating surfaces (polygons or triangles) generated for each voxel element. An example of this restructuring is provided in Figures 6A, 6B, and 6C. Figure 6A illustrates a small section of contiguous three dimensional voxel elements. Each filled-in circle located at a vertex point of a cube in Figure 6A corresponds to a comparison of the data value associated with that vertex and a threshold level. It is the threshold level or range which operates to select the desired surface within the three dimensional array.

Accordingly, the present invention rapidly determines and describes a surface which separates the vertices with filled circles in Figure 6A from the rest of the vertices. These remaining vertices lie along the intersections of lines which are shown dotted in Figure 6A. If one carries out the method of the present invention for the vertex set shown in Figure 6A, the resulting surface structure is shown in Figure 6B. For purposes of clarity, the underlying surface structure is shown separately in Figure 6C. In Figures 6B and 6C, the vertex points of the approximating surfaces chosen are shown as open circles. It should be noted that, for clarity, Figures 6B and 6C do not include any interpolative modifications of the vertex points. The structure of the output presented in Figure 6C is best described as being in vector form, that is, a sequence of connected vertex points. In one embodiment of the present invention, the data embodying Figure 6C comprises a list of such vectors in three dimensions. The list may also include a normal vector associated with each triangular or polygonal region. It is noted that different display processors require data in somewhat different forms. However, the method and apparatus of the present invention are capable of generating data signals in any appropriate format. It is further noted that, in a preferred embodiment of the present invention, a shaded, rasterized image is produced in which each triangular or polygonal surface approximation is shaded on a gray scale basis in dependence upon the relation between the viewing angle selected with respect to the direction of the normal vector to the approximating surface element. To produce smoothly shaded images, the unit normal of each triangle sharing a common vertex is averaged together at the vertex to produce a shared normal. The graphics processor may used shared normals to grade the calculated intensity over the polygonal facet to create a smoothly shaded image. These surface elements are generated for each voxel element which experiences an intersection with the desired surface. Examples of the resulting images are more particularly described in Figures 10, 11, and 12, discussed more fully below.

As pointed out above, it is the threshold value or range which determines the surface or surfaces to be reconstructed on a display device in accordance with the present invention. From the point of view of medical imaging applications, one of the significant advantages of the present invention is that one can selectively view a plurality of different tissue types. The type selection is made on the basis of observed physical properties. For example, in computed x-ray tomography systems, the physical property of import is the x-ray absorption capabilities of various bodily tissues. For example, x-ray absorption in bone is much higher than absorption in skin and other tissues. This fact is particularly illustrated in Figure 7 which is a sample plot of x-ray absorption intensity as a function of pixel distance. In particular, regions for bone and skin are indicated in the figure. It is these physical differences, sampled in a three dimensional space which facilitates the construction of three dimensional surface images in the present invention. While Figure 7 is particularly directed to the situation occurring in the x-ray tomography, it is pointed out that the present invention is not so limited and is usable in any situation in which physical properties of the body being studied are sampled at regularly spaced portions throughout the three dimensional extent of the body. Such data is also generated in nuclear magnetic resonance imaging systems, ultrasound systems, scintillation systems, and systems employing such methods as positron emission tomography. For example, in magnetic resonance imaging, measurable physical properties can include spin-spin and spin-lattice relaxation times. It is noted, however, that the list of these systems is exemplary and that the present invention is not limited thereto. Additionally, many of these systems generate data in an integer representation. However, the present invention is capable of employing data in any format containing totally ordered (in the mathematical sense) data elements.

A data flow diagram of the present invention is shown in Figure 8. In particular, data from magnetic resonance or computed tomography systems is illustrated as being supplied to a set of intensity registers. Typically, the data is structured in the form of a plurality of layers. In the present invention, only two adjacent layers are required at one time for data processing. Even more particularly, a single voxel element at a time is analyzed, each voxel element comprising a set of eight cubically adjacent data points. The term "cubically adjacent" has been defined above. It is noted though that the structure of the present invention readily permits the use of parallel processing systems.

The values in the intensity registers are compared with a predetermined constant for each voxel element present. In general, the constant or threshold of comparison is the same for each voxel element. This comparison generates an eight bit vector which acts as an index to a table of edges. An abbreviated edge table is shown in Table I for the 15 major case occurrences of the present invention. The other cases being merely obtained from the 15 cases by rotation or complementation. The data from the edge table is then used in conjunction with the data at the vertex points, as contained in the intensity registers to generate a set of points or vectors which are preferably interpolated in the manner described above. The threshold constant may also be employed in this interpolation. The interpolated data together with a list of table edges, is then supplied to a geometry engine, or display processor, which operates to generate either vector or raster format images. In preferred embodiments of the present invention, the raster format is generated since this format provides better visual clues for three dimensional images. The resultant image is then typically displayed on a screen such as a cathode ray tube (CRT).

It is noted that since the present invention is capable of displaying multiple tissue types, particularly from data generated from nuclear magnetic resonance imaging systems, it is possible to employ color in the displayed image. For example, it is highly suggestive to view images of bone surfaces in black and white. Other tissue types may be displayed in various shades of pink and gray to more closely match actual anatomical conditions. This feature of the present invention is easily provided by using the threshold value to control the color on the display device.

Figure 9 illustrates a system for imaging in accordance with the present invention. Three dimensional data is provided by an NMR or computed tomography system. As discussed above, other three dimensional data sources may also be employed. Typically, this information is supplied to a storage system for such three dimensional data. This system typically includes magnetic or other storage media. However, the data may be supplied directly to a sufficiently larger random access device. It is noted, however, that it is only necessary to consider adjacent layers at a single time. In fact, it is only necessary to extract data from eight cubically adjacent data points at one time. A voxel scanner selects the particular set of eight data points for processing. These eight data points are supplied to a comparator which is also supplied with a threshold value or range of values. The comparator generates an eight bit vector as described above. The eight bit vector is then supplied to a polygon generator. The polygon generator may comprise a read only memory incorporating the full version of Table I with 256 rows constructed as described above. A scanning signal is employed to synchronize the operation of the scanner and the generator. The scanner also supplies the set of eight voxel signals to an interpolator which is supplied with the threshold value and with the set of vectors from the polygon generator. As described above, an interpolation operation is performed to generate a polygonal surface approximation to the selected surface. The polygonal approximation is particularly adjusted for the proper normal direction by the interpolator. The scanning generation and interpolation operations are performed sequentially for each of the voxel elements in the data to generate a polygon list which is supplied to a display processor. Such display processors are readily available and are well known to those skilled in the computer aided drafting and design and computer aided manufacturing arts (CAD/CAM). In such devices, a viewing direction is typically selected. This view control is selectable by the operator. The display processor then generates a vector or raster format signal which is supplied to a CRT display device.

The benefits accorded the practice of medicine by the present invention are readily apparent in Figures 10, 11, 12, and especially 13. It is important to bear in mind that these figures represent medical images derived from a living human being. No invasive methods were employed to generate these images. It is also noted that all of these images were generated from the same set of data acquired at a single time. The appearance of the removal of the top of the cranium is only a result of data selection. In fact, by merely removing selected segments of data from the three dimensional data set, cross sectional views of saggital, transverse, or coronal sections are easily generated. Other views are equally possible simply by performing a rotation operation prior to data selection. This is easily controlled by selecting the view direction. In Figures 10-13 it is also seen that the subject has been fitted with an endotrachial tube. The arch of this tube is readily apparent in all of the views and it is particularly interesting to note its appearance and position in Figure 12. In the subject being studied, it is seen that there is a bone defect at the base of the left eye between the nose and the eye. Views of this defect are also obtainable from the back, through any selected plane and at any desired viewing angle. Thus, a diagnostician or surgeon is readily capable of viewing the exact structure that a corrective procedure would encounter. Additionally, the medical practitioner is given a view with excellent three dimensional clues which are provided by the shading produced in accordance with the present invention. With particular reference to the present invention, it is seen that the ripple artifacts present at the rear of the skull in Figure 12 have been substantially reduced by the use of the non-linear interpolation carried out in the practice of the present invention. Moreover, image quality is also smoother. It is the determination of appropriate normal directions, as enhanced by nonlinear interpolation, which permits such enhanced shading features to be provided in medical images.

It is also noted that many of the functions performed by the various parts of the system illustrated in Figure 9 may in fact be performed through the use of one or more general or special purposes digital computation systems.

## Claims

1. A preprocessor for a display system for three dimensional images, said preprocessor comprising:

   means for storing three dimensional signal patterns representing the value of at least one physical property associated with a three dimensional body at regularly spaced grid locations within said body;

   - means for retrieving the eight three dimensional signal pattern values associated with each set of cubically adjacent -i.e. located at the eight vertices of a same cube- grid locations within said body, characterized by :
   - means for comparing each set of said eight values at once with a predetermined threshold value to generate an eight-bit binary vector each bit of which vector is zero or one according to the result of the comparison of the respective value with said threshold value
   - look-up table means for classifying said eight values; and
   - means for generating a set of coordinate values for each eight-bit vector by addressing said look-up table means with said eight-bit vector, said coordinate values representing the vertices of at least one predetermined polygonal surface which approximates the intersection of surfaces determined by said threshold value with the volume defined by said eight grid points, said coordinate values also being dependent on the location of said eight grid locations within said body.

2. A preprocessor according to claim 1 comprising interpolation means receiving said coordinate values and producing adjusted coordinated values based on non-linear interpolation applied to at least three data values along a line joining at least three associated grid points.

3. The preprocessor of claim 1 comprising interpolation means receiving said eight three dimensional signal pattern values and said associated coordinate values and operating to adjust the values of said coordinate values in response to weight values dependent on said eight signal pattern values so as to provide linear interpolation along the edges of the voxel elements defined by said eight grid locations.

4. The preprocessor of claim 2 in which said interpolation means employs three of said data values at three of said associated grid points.

5. The preprocessor of any one of claims 1 to 4 in which said means for storage, retrieval and comparison comprises a digital computer.

6. A preprocessor according to claim 1 characterized in that the preprocessor is in a system which includes display processor means for receiving said coordinate values and for converting said coordinate values to a display format; and means for displaying surfaces determined by said threshold, said display means being driven by said display processor.

7. The system of claim 6 in which said display processor means includes means for hidden line removal.

8. The system of claim 6 in which said display format is vector based.

9. The system of claim 6 in which said display format is raster based.

10. The system of claim 6 in which said raster based format provides a shaded display region for each visible polygon in response to the normal direction associated with said polygon in three dimensional space in further response to a selected viewing angle.

11. The preprocessor of claims 1 or 6 in which said physical property is the x-ray absorption characteristic throughout said body.

12. The preprocessor of claims 1 or 6 in which said physical property is magnetic resonance derived data for said body as provided by nuclear magnetic resonance imaging devices.

13. The preprocessor of claims 1 or 6 in combination with a computed tomography x-ray scanner for supplying three dimensional signal patterns representing x-ray absorption, for storage in said storage means.

14. The preprocessor of claims 1 or 6 in combination with a nuclear magnetic resonance imaging system for providing three dimensional signal patterns representing magnetic resonance derived data for storage in said storage means.

15. A method for producing, on a display device, three dimensional surface representations, said method comprising the steps of:

generating three dimensional signal pattern values, said signal pattern values representing the values of at least one physical property associated with a three dimensional body at regularly spaced grid locations within said body characterized by :
- classifying said three-dimensional signal pattern values in look-up table means;
- generating an eight-bit vector for each set of eight cubically adjacent locations throughout said body corresponding to said regularly spaced grid locations, each bit of said vector being zero or one according to the result of the comparison of the respective three-dimensional pattern value with a predetermined threshold value;
- generating a set of coordinate values in response to each eight-bit vector from the lock-up table means addressed by the eight-bit vector and said eight grid locations, said coordinate values representing vertices of at least one predetermined polygonal surface which approximates the intersection of surfaces determined by said threshold value with the volume defined by said eight grid locations, said coordinate values also being dependent upon the location of said grid locations within said body; and
- supplying said coordinate values to a display processor and display device for generating of an image representative of at least one surface within said body, said surface being determined by said threshold value.

16. The method of claim 15 comprising the step of generating a set of interpolated coordinate values from said coordinate values based on non-linear interpolation applied to at least three data values along a line joining at least three associated data points.

17. The method of claim 15 comprising the step of adjusting the values of the coordinate values in response to weight values dependent on the signal pattern values so as to provide linear interpolation along the edges of the voxel elements defined by the grid locations.

**Patentansprüche**

1. Vorprozessor für ein Displaysystem für dreidimensionale Bilder, wobei der Vorprozessor enthält:
   eine Einrichtung zum Speichern dreidimensionaler Signalmuster, die den Wert von wenigstens einer physikalischen Eigenschaft darstellen, die einem dreidimensionalen Körper an regelmäßig beabstandeten Gitterplätzen innerhalb des Körpers zugeordnet ist,
   eine Einrichtung zum Wiedergewinnen der acht dreidimensionalen Signalmusterwerte, die jedem Satz von kubisch benachbarten - d.h. an den acht Eckpunkten von einem gleichen Würfel angeordneten - Gitterplätzen innerhalb des Körpers, gekennzeichnet durch:
   eine Einrichtung zum Vergleichen jedes Satzes der acht Werte gleichzeitig mit einem vorbestimmten Schwellenwert zum Erzeugen eines Acht-Bit-Binärvektors, wobei jedes Bit des Vektors Null oder Eins ist gemäß dem Ergebnis des Vergleiches des entsprechenden Wertes mit dem Schwellenwert,
   eine Nachschlagetabelleneinrichtung zum Klassifizieren der acht Werte und
   eine Einrichtung zum Erzeugen eines Satzes von Koordinatenwerten für jeden Vektor zum Adressieren der Nachschlagetabelleneinrichtung mit dem Acht-Bit-Vektor, wobei die Acht-Bit-Koordinatenwerte die Eckpunkte von wenigstens einer vorbestimmten polygonalen Oberfläche darstellen, die den Schnitt der Oberflächen, die durch den Schwellenwert bestimmt sind, mit dem Volumen annähert, das durch die acht Gitterpunkte definiert ist, wobei die Koordinatenwerte auch von der Lage der acht Gitterplätze innerhalb des Körpers abhängen.

2. Vorprozessor nach Anspruch 1, wobei eine Interpolationseinrichtung vorgesehen ist, die die Koordinatenwerte empfängt und eingestellte Koordinatenwerte erzeugt auf der Basis einer nicht-linearen Interpolation, die auf wenigstens drei Datenwerte entlang einer Linie ausgeübt wird, die wenigstens drei zugeordnete Gitterpunkte verbindet.

3. Vorprozessor nach Anspruch 1, wobei eine Interpolationseinrichtung vorgesehen ist, die die acht dreidimensionalen Signalmusterwerte und zugeordnete Koordinatenwerte empfängt und die Funktion hat, die Werte der Koordinatenwerte in Abhängigkeit von Gewichtungswerten einzustellen, die von den acht Signalmusterwerten abhängen, um so für eine lineare Interpolation entlang den Rändern der Voxelemente zu sorgen, die durch die acht Gitterplätze definiert sind.

4. Vorprozessor nach Anspruch 2, wobei die Interpolationseinrichtung drei der Datenwerte an drei der zugeordneten Gitterpunkte verwendet.

5. Vorprozessor nach einem der Ansprüche 1 bis 4, wobei die Einrichtung zum Speichern, Wiedergewinnen und Vergleichen einen digitalen Computer aufweist.

6. Vorprozessor nach Anspruch 1, dadurch gekennzeichnet, daß der Vorprozessor in einem System ist, das eine Display-Prozessoreinrichtung zum Empfangen der Koordinatenwerte und zum Umwandeln der Koordinatenwerte in ein Displayformat und eine Einrichtung aufweist zum Darstellen von Oberflächen, die durch den Schwellenwert bestimmt sind, wobei die Displayeinrichtung durch einen Displayprozessor angesteuert ist.

7. System nach Anspruch 6, wobei die Display-Prozessoreinrichtung Mittel zum Beseitigen verdeckter Linien aufweist.

8. System nach Anspruch 6, wobei das Displayformat auf Sektorbasis ist.

9. System nach Anspruch 6, wobei das Displayformat auf Rasterbasis ist.

10. System nach Anspruch 6, wobei das Format auf Rasterbasis einen schattierten Displaybereich für jedes sichtbare Polygon liefert bei der normalen Richtung, die dem Polygon im dreidimensionalen Raum zugeordnet ist, und ferner bei einem gewählten Betrachtungswinkel.

**11.** Vorprozessor nach Anspruch 1 oder 6, wobei die physikalische Eigenschaft die Röntgenstrahlen-Absorbtionscharakteristik in dem Körper ist.

**12.** Vorprozessor nach Anspruch 1 oder 6, wobei die physikalische Eigenschaft von Magnetresonanz abgeleitete Daten für den Körper ist, wie sie durch Magnetresonanz-Bildgebungsvorrichtungen geliefert werden.

**13.** Vorprozessor nach Anspruch 1 oder 6 in Kombination mit einem Röntgen-Tomografie-Computerscanner zum Liefern dreidimensionaler Signalmuster, die Röntgenstrahlenabsorbtion darstellen, zum Speichern in der Speichereinrichtung.

**14.** Vorprozessor nach Anspruch 1 oder 6 in Kombination mit einem Magnetresonanz-Bildgebungssystem zum Liefern dreidimensionaler Signalmuster, die von Magnetresonanz abgeleitete Daten zur Speicherung in der Speichereinrichtung darstellen.

**15.** Verfahren zum Erzeugen dreidimensionaler Oberflächendarstellung auf einer Display-Vorrichtung, wobei das Verfahren die Schritte enthält:

Erzeugen dreidimensionaler Signalmusterwerte, wobei die Signalmusterwerte die Werte von wenigstens einer physikalischen Eigenschaft darstellen, die einem dreidimensionalen Körper an regelmäßig beabstandeten Gitterplätzen in dem Körper zugeordnet ist, gekennzeichnet durch:

Klassifizieren der dreidimensionalen Signalmusterwerte in einer Nachschlagetabelleneinrichtung,

Generieren eines Acht-Bit-Vektors für jeden Satz von ackt kubisch benachbarten Plätzen in dem Körper, die den regelmäßig beabstandeten Gitterplätzen entsprechen, wobei jedes Bit des Vektors Null oder Eins ist gemäß dem Ergebnis von dem Vergleich der entsprechenden dreidimensionalen Musterwerte mit einem vorbestimmten Schwellenwert,

Generieren eines Satzes von Koordinatenwerten bei jedem Acht-Bit-Vektor aus der Nachschlagetabelleneinrichtung, die durch den Acht-Bit-Vektor und die acht Gitterplätze adressiert ist, wobei die Koordinatenwerte Eckpunkte von wenigstens einer polygonalen Oberfläche darstellen, die den Schnitt von Oberflächen, die durch den Schwellenwert bestimmt sind, mit dem Volumen annähert, das durch die acht Gitterplätze definiert ist, wobei die Koordinatenwerte auch von der Lage der Gitterplätze in dem Körper abhängen, und

Liefern der Koordinatenwerte an einen Display-Prozessor oder eine Display-Vorrichtung zum Erzeugen eines Bildes, das wenigstens eine Fläche in dem Körper darstellt, die durch den Schwellenwert bestimmt ist.

**16.** Verfahren nach Anspruch 15, wobei ein Satz von interpolierten Koordinatenwerten aus den Koordinatenwerten auf der Basis einer nicht-linearen Interpolation generiert wird, die auf wenigstens drei Datenwerte entlang einer Linie ausgeübt wird, die wenigstens drei zugeordnete Datenpunkte verbindet.

**17.** Verfahren nach Anspruch 15, wobei die Werte der Koordinatenwerte in Abhängigkeit von Gewichtungswerten eingestellt werden, die von den Signalmusterwerten abhängen, um so eine lineare Interpolation entlang den Rändern der Voxelelemente zu liefern, die durch die Gitterplätze definiert sind.

## Revendications

**1.** Préprocesseur pour un système de visualisation destiné à des images tridimensionnelles, ledit préprocesseur comprenant:
- des moyens pour stocker des combinaisons de signaux tridimensionnelles représentant la valeur d'au moins une propriété physique associée à un corps tridimensionnel à des emplacements de réseau espacés de façon régulière à l'intérieur dudit corps;
- des moyens pour rappeler les huit valeurs de combinaisons de signaux tridimensionnelles associées à chaque ensemble d'emplacements de réseau adjacents cubiquement (c'est-à-dire placés aux huit sommets d'un même cube) à l'intérieur dudit corps, caractérisé par:
- des moyens pour comparer simultanément chaque ensemble des huit valeurs précitées avec une valeur de seuil prédéterminée de manière à générer un vecteur à huit bits dont chaque bit est un zéro ou un un selon le résultat de la comparaison de la valeur respective avec ladite valeur de seuil;
- des moyens formant table de consultation pour classer les huit valeurs précitées;
- des moyens pour générer à l'aide dudit vecteur à huit bits un ensemble de valeurs de coordonnées pour chaque vecteur à huit bits par adressage desdits moyens formant table de consultation, lesdites valeurs de coordonnées représentant les sommets d'au moins une surface polygonale prédéterminée qui donne une approximation de l'intersection des surfaces déterminées par ladite valeur de seuil avec le volume défini par lesdits huit points de réseau, lesdites valeurs de coordonnées dépendant aussi de l'emplacement desdits huit emplacements de réseaux prédéterminés à l'intérieur dudit corps.

2. Préprocesseur selon la revendication 1 comprenant des moyens d'interpolation recevant lesdites valeurs de coordonnées et produisant des valeurs de coordonnées ajustées basées sur une interpolation non linéaire appliquée à au moins trois valeurs de données le long d'une ligne reliant au moins trois points de réseau associés.

3. Préprocesseur selon la revendication 1, comprenant des moyens d'interpolation recevant les huit valeurs de combinaisons de signaux tridimensionnelles précitées et lesdites valeurs de coordonnées associées et agissant de manière à ajuster les valeurs desdites valeurs de coordonnées en réponse à des valeurs de poids dépendant desdites huit valeurs de combinaisons de signaux de manière à fournir une interpolation linéaire le long des bords des "voxels" définis par les huit emplacements de réseau précités.

4. Préprocesseur selon la revendication 2, dans lequel lesdits moyens d'interpolation utilisent trois desdites valeurs de données et trois desdits points de réseau associés.

5. Préprocesseur selon l'une quelconque des revendications 1 à 4, dans lequel lesdits moyens de stockage, de rappel et de comparaison comprennent un ordinateur numérique.

6. Préprocesseur selon la revendication 1, caractérisé en ce qu'il est un système qui comprend: un processeur de visualisation destiné à recevoir lesdites valeurs de coordonnées et à convertir lesdites valeurs de coordonnées en un format de visualisation; et des moyens pour visualiser des surfaces déterminées par ledit seuil, lesdits moyens de visualisation étant commandés par ledit processeur de visualisation.

7. Système selon la revendication 6, dans lequel ledit processeur de visualisation comprend des moyens pour masquer l'élimination de lignes.

8. Système selon la revendication 6, dans lequel ledit format de visualisation est basé sur un vecteur.

9. Système selon la revendication 6, dans lequel ledit format de visualisation est basé sur une grille.

10. Système selon la revendication 6, dans lequel ledit format basé sur une grille fournit une région de visualisation ombrée pour chaque polygone visible en réponse à la direction normale associée audit polygone dans un espace tridimensionnel et, en outre, en réponse à un angle d'observation choisi.

11. Préprocesseur selon la revendication 1 ou 6, dans lequel ladite propriété physique est la caractéristique d'absorption des rayons X dans la totalité dudit corps.

12. Préprocesseur selon la revendication 1 ou 6, dans lequel ladite propriété physique pour ledit corps est une donnée obtenue par résonance magnétique telle que fournie par des dispositifs d'imagerie à résonance magnétique nucléaire.

13. Préprocesseur selon la revendication 1 ou 6, en combinaison avec un scanneur à rayons X pour tomographie assistée par ordinateur en vue de fournir des combinaisons de signaux trimensionnelles représentant une absorption des rayons X en vue d'un stockage dans ledit moyen de stokage.

14. Préprocesseur selon la revendication 1 ou 6 en combinaison avec un système d'imagerie à résonance magnétique nucléaire destiné à fournir des combinaisons de signaux tridimensionnelles représentant des données obtenues par résonance magnétique en vue d'un stockage dans ledit moyen de stockage.

15. Procédé pour produire sur un dispositif de visualisation, des représentations de surfaces tridimensionnelles, ledit procédé comprenant les étapes consistant:

- à générer trois valeurs de combinaisons de signaux tridimensionnelles, lesdites valeurs de combinaison de signaux représentant les valeurs d'au moins une propriété physique associée à un corps tridimensionnel à des emplacements de réseau espacés régulièrement à l'intérieur dudit corps, caractérisé par le fait que:

- on classe lesdites valeurs de combinaisons de signaux tridimensionnelles dans un moyen formant table de consultation,
- on génère un vecteur à huit bits pour chaque emplacement cubiquement adjacents se trouvant dans la totalité dudit corps et correspondant auxdits emplacements de réseau espacés de façon régulière, chaque bit dudit vecteur étant un zéro ou un un selon le résultat de la comparaison de la valeur de combinaison tridimensionnelle respective avec une valeur de seuil prédéterminée;
- on génère un ensemble de valeurs de coordonnées en réponse à chaque vecteur à huit bits à partir de la table de consultation adressée par le vecteur à huit bits et lesdits emplacements de réseau précités, lesdites valeurs de coordonnées représentant les sommets d'au moins une surface polygonale prédéterminée qui donne une approximation de l'intersection des surfaces déterminées par ladite valeur de seuil avec le volume défini par lesdits huit emplacements de réseau, lesdites valeurs de coordonnées dépendant également de l'emplacement desdits emplacements de réseau à l'intérieur dudit corps;
- on fournit lesdites valeurs de coordonnées à un processeur d'affichage et au dispositif de visualisation pour générer une image représentative d'au moins une surface à l'intérieur dudit corps, ladite surface étant déterminée par ladite valeur de seuil.

16. Processeur selon la revendication 15, comprenant l'étape consistant à générer un ensemble de valeurs de coordonnées interpolées obtenues à partir des valeurs de coordonnées basées sur une interpolation non linéaire et appliquées au moins à trois valeurs de données le long d'une ligne reliant au moins trois points de données associés.

17. Processeur selon la revendication 15, comprenant l'étape consistant à ajuster les valeurs des valeurs de coordonnées en réponse à des valeurs de poids dépendant des valeurs de combinaisons de signaux de manière à effectuer une interpolation linéaire le long des bords des voxels définis par les emplacements de réseau.

FIG. 1
VERTEX LABELS

FIG. 2
EDGE LABELS

FIG. 3A
CASE I

FIG. 4A'

E4
E5    EI

FIG. 4A
CASE I

E5
E4
VI    EI

FIG. 4B"

FIG. 3B
CASE 2

FIG. 4B'

FIG. 4B
CASE 2

FIG. 3C
CASE 3

V3

V1

FIG. 4C'

E3

E7

E4

E2

E5

E1

FIG. 4C
CASE 3

E7

E5

E3

V3

E4

E2

V1

E1

FIG. 3D
CASE 4

V7

VI

FIG. 4D'

E11    E7

E4

E5    EI

E10

FIG. 4D
CASE 4

E11    V7

E10

E7

E5

E4

VI    EI

FIG. 3E
CASE 5

Y1    (V4 HIDDEN)    V2

FIG. 4E

E8    E3

E2

E5    E6

FIG. 4E
CASE 5

E8

E5    E6    E3

V4

E2

Y1    Y2

FIG. 3F
CASE 6

FIG. 4F'

FIG. 4F
CASE 6

FIG. 3G
CASE 7

V8

V6

VI

FIG. 4G'

E8    E11

E12
E4

E10

E5    E1  E9    E6

FIG. 4G
CASE 7

V8    E11

E12
E10

E9    V6
E8

E6

E5

E4

VI    E1

FIG. 3H
CASE 8

V3

V1   (V4 HIDDEN)   V2

FIG. 4H'

E8   E7

E5   E6

FIG. 4H
CASE 8

E8   E7

E5   E6

V4   V3

V1   V2

FIG. 3I
CASE 9

(V4 HIDDEN)

FIG. 4I'

FIG. 4I
CASE 9

**FIG. 3K**
CASE 11

(Y4 HIDDEN)

**FIG. 4K'**

(TRIANGLE 3, 11, 5
NOT VISIBLE)

**FIG. 4K**
CASE 11

FIG. 3L
CASE 12

FIG. 4L'

FIG. 4L
CASE 12

FIG. 3M
CASE 13

FIG. 4M'

FIG. 4M
CASE 13

FIG. 3N
CASE 14
V8

(V4 HIDDEN)  V2

V3

FIG. 4N'
E11  E7
E12
E4
E1

(TRIANGLE 7, 12, 4 NOT
VISIBLE)

FIG. 4N
V8  E11
E12
E7
V4
V3
E4
E1  V2

FIG. 5
THRESHHOLD = 6
CASE 2

FIG. 6A

FIG. 6B

FIG. 6C

FIG. 7

## FIG. 8

```
┌──────────────┐          ┌──────────────┐
│   CONSTANT   │          │  MR OR CT    │
└──────────────┘          └──────────────┘
                                  │
                                  ▼
                          ┌──────────────┐
                          │  INTENSITY   │
                          │  REGISTERS   │
                          └──────────────┘
                                  │
                                  ▼
                          ┌──────────────┐
                          │   COMPARE    │
                          └──────────────┘
                                  │
                                  ▼
                          ┌──────────────┐
                          │    INDEX     │
                          └──────────────┘
                                  │
                                  ▼
                  ┌──────────────────────────┐
                  │     TABLE OF EDGES       │
                  └──────────────────────────┘

┌──────────────┐
│ INTERPOLATE  │
└──────────────┘
        │
        ▼
┌──────────────────────────┐
│        GEOMETRY          │
│         ENGINE           │
└──────────────────────────┘
                │
                ▼
        ┌──────────────┐
        │   DISPLAY    │
        └──────────────┘
```

*FIG. 9*

FIG. 10

FIG. 11

FIG. 12

FIG. 18